# EUROPEAN PATENT SPECIFICATION

(11) **EP 1 959 664 B1**
(45) Date of publication and mention of the grant of the patent: **03.04.2013**
(21) Application number: 08002464.9
(22) Date of filing: 11.02.2008
(51) Int. Cl.: H04N 1/32

(54) **Peripheral device**
Peripheriegerät
Dispositif périphérique

(30) Priority: 15.02.2007 JP 2007035142
(43) Date of publication of application: 20.08.2008
(73) Proprietor: Brother Kogyo Kabushiki Kaisha, Nagoya-shi, Aichi-ken 467-8561 (JP)
(72) Inventor: Shirai, Takaaki, Nagoya-shi Aichi 467-8562 (JP)
(74) Representative: Kuhnen & Wacker

(56) References cited:
- EP-A- 1 587 002
- WO-A-2006/025590
- US-A1- 2005 105 135
- US-A1- 2005 262 134
- US-B1- 7 043 688

## Description

The present invention relates to a peripheral device controllable from a terminal via a network and to a user interface program of a terminal for controlling the peripheral device via a network.

Japanese Patent Application Publication No. 2000-181657 (referred to as a patent document 1 herein after) discloses a technique for controlling a plurality of printers connected to a network from a host computer (a terminal) by an icon operation on the host computer. The technique is as follows. On a screen of the terminal, a print instruction dialog and a process icon corresponding to a print output destination (printer) and print setting are displayed. The process icon corresponds to print output destination information for identifying each printer and print setting information for identifying operating conditions of a printer. In addition, even in the case of the same printer, when print setting is different, a process icon is created for each print setting. A user drags and drops one process icon into a print instruction dialog. By doing this, print setting information is transmitted to a printer identified by the process icon. Thus, a plurality of printers connected to a network are controlled by an icon operation.

In this specification, not only printers but also devices connected to a network, such as facsimiles, scanners and multifunctional devices are collectively referred to as a peripheral device.

Further, in this specification, a function executed based on different setting conditions is described as a "different function". For example, in the case of a printer, one-sided printing and double-sided printing are described to be different functions.

According to a technique of the patent document 1, the process icon corresponds to print output destination information for identifying each printer and print setting information for identifying operating conditions of a printer. However, in order to create the print setting information for identifying a function (e.g., a function of printing with specific print conditions) desired by a user, a specialized user interface program (hereinafter, referred to as a "specialized UI") installed in a terminal must be used.

Recently, functions installed in a peripheral device (typified by a printer) have been diversified into various kinds and therefore, also a specialized UI has been complicated. A user, when desiring a peripheral device to execute a new function (e.g., a function of printing with new print conditions), must operate a complicated specialized UI. In terms of the patent document 1, an operation after once creating a process icon is simple; however, an operation of creating a new process icon for causing a peripheral device to execute a new function becomes complicated. If process icons are previously prepared for various assumed functions, the number of process icons becomes enormous and on the contrary, it becomes difficult for a user to use the icons.

From US2005/0105135 A1 there is known a data processing apparatus for executing predetermined printing processes to a file which has: a display for displaying a plurality of boxes (folders) associated with a plurality of printing processes (for example, 2up, Duplex, Staple) which can be executed to the file; and a mouse for inputting a moving instruction to the file displayed on the display. When it is detected that the file which is moved by the moving instruction input by the mouse has passed through the plurality of boxes (folders) displayed on the display, the printing processes regarding the boxes (folders) through which the file has passed are executed to the file on the basis of the detection result.

It is an object of the present invention to provide a peripheral device controllable from a terminal via a network so as to easily execute a desired function without providing a specialized user interface in the terminal.

One aspect of the present teachings disclosed in the present specification will be described below.

The peripheral device holds a plurality of resources. "Resources held in the peripheral device" means hardware units provided with the peripheral device and data (software) stored in the peripheral device. For example, in the case of a multifunctional device, a print unit, a facsimile unit and address data are held as resources.

The peripheral device can execute a given function by a combination of some of the held resources. In other words, a function executed by the peripheral device can be identified by a combination of the resources held in the peripheral device.

In the meantime, a file sharing protocol for operating, from a terminal, a file (an electronic file) stored in another terminal connected to a network is in widespread use. When using this protocol, a user can browse a list of the files stored in another terminal connected to a network, or can drag and drop files from one folder to another. If a simple operation such as a file operation can be used, a user can easily control the peripheral device to perform those operations even if the peripheral device is complicated.

One aspect of the present teachings is based on an idea of using a concept of the file operation for the control of the peripheral device. In this technique, a peripheral device stores files. Each of the files corresponds to each of resources held in the peripheral device. By linking the resources held in the peripheral device to files, the peripheral device can transmit, to the terminal with communication based on a file sharing protocol, information of its own resources. A file corresponding to a resource held in the peripheral device is referred to as a "resource file".

By a combination of the resource files that a user selects from among a list of the resource files displayed on a screen of the terminal, the peripheral device can identify a function to be executed (a function that the user desires for execution). The peripheral device executes the identified function. By only selecting resources for identifying a desired function from among a list of the resources (resource files) displayed on the screen of the terminal, the user can allow the peripheral device to execute the desired function. Without using a specialized user interface, the user can allow the peripheral device to execute a desired function by a simple operation. That is, a peripheral device capable of being controlled by a simple operation is realized.

One aspect of the present teachings disclosed by this specification is a peripheral device capable of executing a plurality of functions and capable of being controlled from a terminal via a network. This peripheral device has a plurality of resources, a memory, a transmitter, a receiver and a function controller.

The plurality of resources are used for executing the functions. The memory stores a plurality of resource files and data of a specific store region. Each of the resource files respectively corresponds to each of the resources. The transmitter transmits information to the terminal with communication based on a file sharing protocol. The transmit information includes data of the specific store region and a list of the resource files stored in the memory. The receiver receives a first store command from the terminal with communication based on the file sharing protocol. The first store command is a command that designates at least one resource file in the list and requires the peripheral device to store the designated resource file in the specific store region. The function controller identifies at least one of the functions by a combination of the resources corresponding to the designated resource files. The function controller executes the identified function.

The specific store region for storing files may be typically a "folder". Hereinafter, the specific store region may be referred to as a specific folder.

The transmitter, the receiver and the function controller in this specification do not mean only physical circuits but also mean software modules whose function is identified by a program. When the transmitter, the receiver and the function controller are realized by software, a CPU of the peripheral device executing the software may correspond to the transmitter, the receiver and the function controller.

The above-described peripheral device links the resources held in the peripheral device with individual electric files respectively and stores the electric files. The electric files corresponding to the resources are referred to as resource files. The transmitter transmits to the terminal a list of the resource files respectively corresponding to the held resources. The resource files are transmitted with communication based on the file sharing protocol. Therefore, the terminal can display on the screen a list of the resources held in the peripheral device as if the list was a list of files. Further, the transmitter transmits, to the terminal, information of the specific folder (specific store region). The terminal can also display the specific folder on the screen.

From among a list of the plurality of resource files respectively corresponding to the plurality of resources, a user of the terminal can select resource files for identifying a desired function, and drags and drops the resource files into the specific folder. In response to this user's operation, the terminal transmits a store command (first store command) to the peripheral device with communication based on the file sharing protocol. The first store command is a command that designates the resource files selected by the user and requires the peripheral device to store the designated resource files in the specific folder.

The peripheral device, when receiving the first store command, identifies one of functions by by a combination of the resources corresponding to the designated resource files. Then, the peripheral device executes the identified function. That is, for the peripheral device, the specific folder acts as a trigger for the function execution.

According to the above-described peripheral device, by only dragging and dropping some resource files into the specific folder, a user can allow the peripheral device to execute a desired function. Without using a specialized UI, a user can easily control the peripheral device to execute a desired function with a sense of simple file operation.

In the invention, each resource file records operating conditions of the corresponding resource. The function controller operates the resources with the operating conditions recorded in the resource files when executing the identified function.

The resource files are displayed on a screen of a terminal. Therefore, a user can open the resource file to describe desired operating conditions. The user can easily designate the operating conditions in detail. Because of being able to describe the operating conditions in the resource file, the user can designate the desired operating conditions without using the specialized UI.

By recording in the resource files the operating conditions of the resources, the user can easily control the peripheral device to execute the desired function with the desired operating conditions.

The peripheral device also preferably has the following technical features.

The receiver receives a second store command from the terminal with communication based on the file sharing protocol. The second store command is a command that designates a target file having a specific attribute and requires the peripheral device to store the designated target file in the specific folder (the specific store region). The function controller executes the identified function for the designated target file.

Some of the function of the peripheral device may require a target file to be processed. For example, in the case of a print function, a document file to be printed is required as the target file. In such a case, by just dragging and dropping the target file into the specific folder, a user can control the peripheral device to execute a desired function for the desired target file.

The target file has a specific attribute. The peripheral device can recognize that a file designated by the second store command has a specific attribute. The peripheral device can determine that when the designated file has a specific attribute, the file is a target file for the function.

The peripheral device also preferably has the following technical features.

The function controller may execute the identified function when the receiver receives the first store command, an attribute change command that requires the peripheral device to change an attribute of the specific folder, and the second store command in this order.

An attribute change command of the specific folder acts as a safety switch of the function execution. As long as the attribute of the specific folder is not changed, the peripheral device does not execute the identified function. It avoids the accident that the peripheral device executes the identified function when a user wrongly drags and drops a target file into the specific folder.

The function controller may not identify the function by the combination of the resources corresponding to the designated resource files. In such a case, it is preferable that the transmitter may transmit, to the terminal, information of the type of resources necessary to identify the function. In this way, the peripheral device can inform the user of the presence of a resource file missing to identify a desired function.
FIG.1 shows a block diagram of a multifunctional device (one example of a peripheral device).
FIG.2 shows one example of contents of a resource file.
FIG.3 shows one example of a screen display of a terminal.
FIG.4 shows a flowchart of attribute information transmit process of a multifunctional device.
FIG.5 shows a flowchart of a function execution process of a multifunctional device.
FIG.6 shows another example of a screen display of a terminal.
FIG. 7 shows a flowchart of a function execution process of a multifunctional device according to a second embodiment.
FIG.8 shows a flowchart of a file attribute information displaying process of a terminal.
FIG.9 shows a flowchart of a multifunctional device control process of a terminal.
FIG.10 shows a flowchart of a function execution instructing process of a terminal.

An embodiment of a peripheral device of the present invention will be described with reference to the drawings. The peripheral device according to the present embodiment is a multifunctional device having a printer function, a scanner function and a facsimile function.

### (FIRST EMBODIMENT)

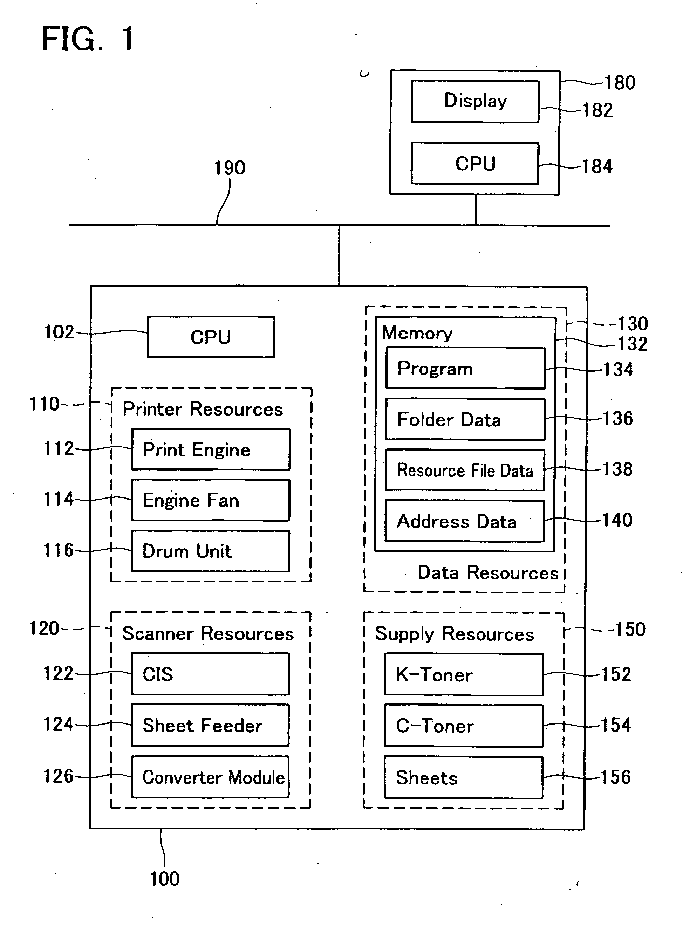

FIG.1 shows a block diagram of a multifunctional device 100. The multifunctional device 100 may be referred to as the "device 100" hereinafter for short. FIG.1 also shows a block diagram of a terminal 180 that controls the device 100 via a network 190. In other words, the device 100 and the terminal 180 are connected via a network 190.

The device 100 has a CPU 102 as well as printer resources 110, scanner resources 120, supply resources 150 and data resources 130. The "resources" mean various parts, tools or equipments provided in the device 100. The "resources" may also means data stored in the device 100. The "resources" mean various parts or devices that are used for executing functions. In other wards, the term "resources" in this specification mean the same concept as that of "resources" normally used in a technical field of a computer. FIG 1 does not show all the "resources" provided in the device 100 (e.g., resources for realizing a facsimile function). FIG. 1 shows only the "resources" necessary for explanation of this embodiment.

The printer resources 110 are a collective term for the resources necessary for the device 100 to execute a print function. The printer resources 110 include a print engine 112 (a print unit including a print head is referred to as a print engine), an engine fan 114 and a drum unit 116.
The scanner resources 120 are a collective term for the resources necessary for the device 100 to execute a scanner function. The scanner function can read images and/or text on a document by a CIS (Contact Image Sensor). The scanner resources 120 include the CIS 122, a sheet feeder 124 and a converter module 126.
The supply resources 150 are a collective term for the supply resources used by the device 100 to execute various functions. The supply resources 150 include K-toner 152, C-toner 154 and sheets 156. In addition, the K-toner is black toner and the C-toner is cyan toner.
The data resources 130 are a collective term for the resources of data used by the device 100 to execute various functions. The data resources 130 include a program 134, folder data 136, resource file data 138 and address data 140.
The program 134 is a program for specifying the respective processes executed by the CPU 102.
In addition, the respective data resources are stored in a memory 132. The memory 132 may be a semiconductor memory such as a ROM or a RAM, or may be a magnetic recording system such as a hard disk.
The address data 140 is data where the other party's phone number for facsimile transmission is described. In addition, the device 100 also has a facsimile function, and the other resources for the facsimile function are not shown in the figure.
As described above, the term "resources" mean a hardware unit (the print engine 112 and the drum unit 116 and so on) used by the device 100 when executing functions, and data (software) stored in the device 100.

The resource file data 138 of the data resource 130 will be described.
The resource file data 138 is data of resource files respectively corresponding to the above-described resources. For example, for the print engine 112, a file called "print engine.dev" is stored as one of the resource file data 138. Further, for the engine fan 114, a file called the "engine fan.dev" is stored as one of the resource file data 138. Thus, the device 100 has a resource file with a name of each resource attached with an identifier (file extension) called "dev". Each of the resource files is a file for respectively indicating each of the resources held in the device 100.

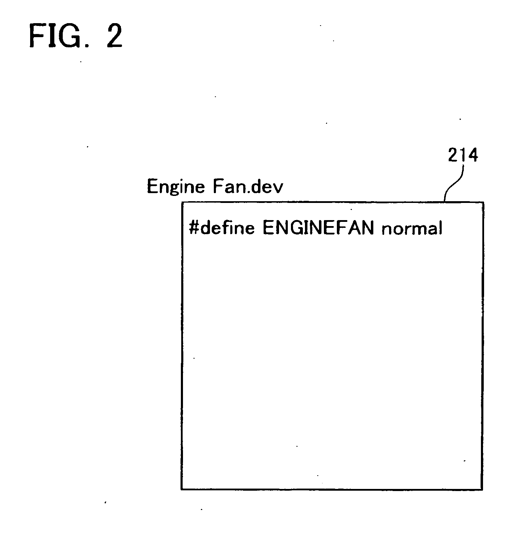

FIG.2 shows one example of the resource file. FIG.2 shows data contents of an "engine fan.dev" file 214 indicating the engine fan 114.
The "engine fan.dev" 214 describes operating conditions of the engine fan 114. Description of the engine fan.dev 214 shown in FIG.2 means that the engine fan 114 is operated with the operating conditions called a normal mode. The other resource files similarly describe the operating conditions for operating each resource.

Next, folder data 136 as one of the data resources 130 will be described.
The folder data 136 is data where information of a folder set in the memory 132 is described. The "folder" means a storage area (or store region in other words) for storing files. More specifically, the "storage area" does not mean a physical memory area but means a logical area given for organizing and managing files. In other words, the "storage area" means a name of a group for grouping the files into several groups. The folder data 136 describes, specifically, names and attributes of folders set in the memory 132 and names of files stored in the respective folders.
In the memory 132 of the device 100, a printer resource folder, a scanner resource folder, a supply resource folder, a data resource folder and a function folder are set. Further, each of the resource files is stored in the resource folder with a name of a group of the resource. For example, the above-described engine fan.dev 214 is stored in the printer resource folder.

Next, the terminal 180 will be described.
The terminal 180 has a display 182 and a CPU 184. In the terminal 180, a program (not shown) is installed and the CPU 184 operates according to the program.

Into each of the device 100 and the terminal 180, a program for executing a file sharing protocol is installed. The file sharing protocol is, for example, WebDAV (Web-based Distributed Authoring and Versioning).
By this file sharing protocol, folders and/or files held in the device 100 can be handled from the terminal 180. For example, when a command that requires information of folders or files (this command is referred to as an attribute information require command) is transmitted from the terminal 180 to the device 100, the device 100 transmits, to the terminal 180 in response to this command, the information of its own folders or files (namely, the folder data 136). Further, when a command that requires the device 100 to store the designated file in the designated folder (this command is referred to as a store command) is transmitted from the terminal 180 to the device 100, the device 100 stores, in response to the command, the predetermined designated file in the designated folder.
Tangible contents of the attribute information require command or the store command are defined by the file sharing protocol. Accordingly, a device capable of using the file sharing protocol can handle the attribute information require command or the store command.
As described above, by the file sharing protocol, a user can easily handle, from the terminal 180, a file held in the device 100.

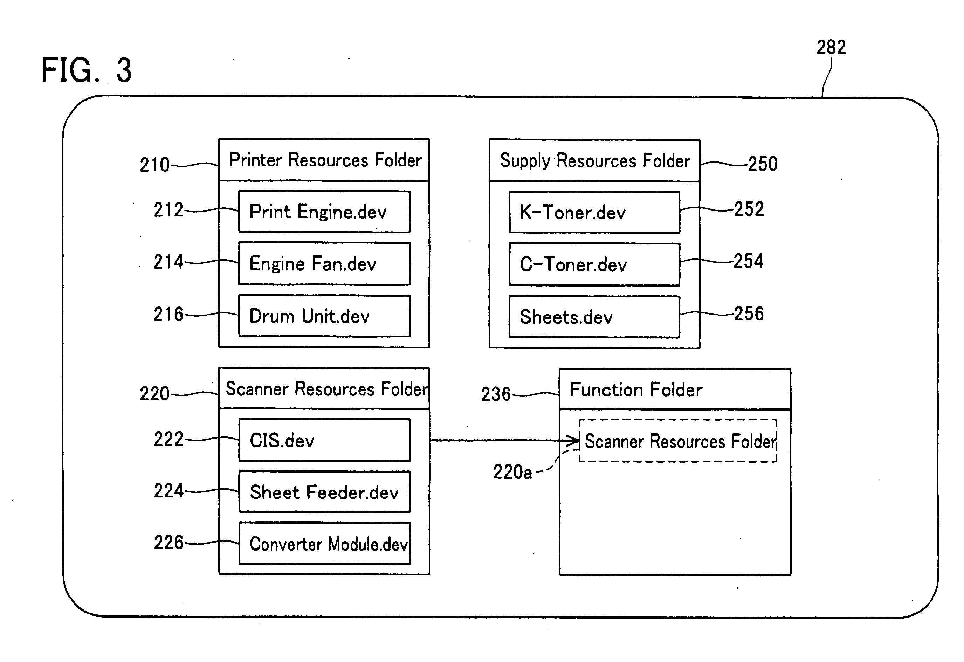

Next, an operation of the terminal 180 performed when a user controls the device 100 to execute a desired function will be described. FIG 3 shows one example of screen displayed on the display 182 of the terminal 180 (screen 282). '
At first, the user operates the terminal 180 to display, on the screen 282, information of the files or folders held in the device 100.
In FIG 3, the screen 282 displays a printer resource folder 210, a scanner resource folder 220, a supply resource folder 250 and a function folder 236 as folders held in the device 100. Further, the screen 282 displays the following information:
- Information that a print engine.dev 212 indicating the print engine 112, an engine fan.dev 214 indicating the engine fan 114, and a drum unit.dev 216 indicating the drum unit 116 are stored in the printer resource folder 210;
- Information that a CIS.dev 222 indicating the CIS 122, a sheet feeder dev 224 indicating the sheet feeder 124, and a converter module.dev 226 indicating the converter module 126 are stored in the scanner resource folder 220; and
- Information that K-toner.dev 252 indicating the K-toner 152, C-toner.dev 254 indicating the C-toner 154 and sheet.dev 256 indicating the printing sheet 156 are stored in the supply resource folder 250.
   That is, the screen 282 of the terminal 180 displays a list of the resource files held in the device 100. In addition, some of the resources (resource files) held in the device 100 are omitted in FIG3.
   The resource files or folders are displayed, on the screen 282, as symbol images (so-called icons) representing the resource files or folders.
   When information of the files and folders held in the device 100 is displayed on the screen 282, no files are stored in the function folder 236. A scanner resource folder 220a shown in FIG3 will be described later.
   In addition files of K-toner.dev 252 and C-toner.dev 254 may be expressed as "configuration files" that indicate setting conditions necessary to execute at least one function such as the print function.

Suppose now a case where a user desires the device 100 to execute a scanner function. The scanner function can be identified by the combination of the resources indicated by the respective resource files stored in the scanner resource folder 220. The user drags and drops all the resource files (CIS.dev 222, sheet feeder.dev 224 and converter module.dev 226) stored in the scanner resource folder 220 into the function folder 236. Instead of dragging and dropping all the resource files stored in the scanner resource folder 220 respectively into the function folder 236, the user may drag and drop the whole scanner resource folder 220 into the function folder 236. When the user drags and drops the scanner folder 220 into the function folder 236, the store command is transmitted from the terminal 180 to the device 100. The transmitted store command designates all the resource files stored in the scanner resource folder 220 and requires the device 100 to store the designated resource files in the function folder 236. Hereinafter, the store command that requires the device 100 to store the resource files in the function folder 236 is referred to as a resource file store command (or a first store command). When the device 100 receives this resource file store command, the device 100 copies all the resource files stored in the scanner resource folder 220 with the scanner resource folder 220 itself, and stores the copied folder and files in the function folder 236. Results of copying and storing are transmitted from the device 100 to the terminal 180. As a result, information that the scanner resource folder 220a as a copy of the scanner resource folder 220 is stored in the function folder 236 is displayed on the screen 282 of the terminal 180. In the scanner resource folder 220a stored in the function folder 236, copies of the CIS.dev 222, the sheet feeder.dev 224 and the converter module.dev 226 are stored.
When the scanner resource folder 220 is dragged and dropped into the function folder 236 (or when the device 100 receives the first store command), the device 100 executes the scanner function as described later. In other words, by only dragging and dropping the resource files on the screen 282, the user can control the device 100 to execute a desired function.

A process executed by the device 100 in response to the above-described user operation will be described.

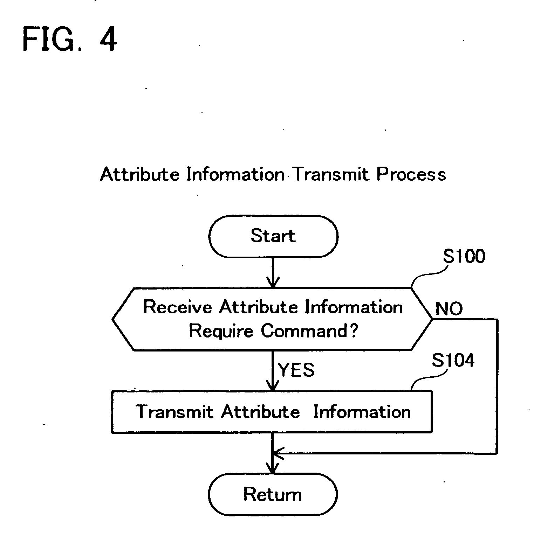

FIG 4 is a flowchart of an attribute information transmit process for transmitting, to the terminal 180 in response to receiving the command (attribute information require command) from the terminal 180, attribute information of the files or folders held in the device 100.
The device 100, when receiving a command, from the terminal 180, that requires the attribute information of its own files (step S 100: YES), transmits to the terminal 180 the attribute information of its own files (step S104). In other words, the device 100 transmits to the terminal 180 a list of the resource files corresponding to the resources held in the device 100.
A concrete data structure of the attribute information require command or the details of a response process to the attribute require command is previously determined by the file sharing protocol. Since the file sharing protocol itself is well known, a detailed description thereof is omitted.

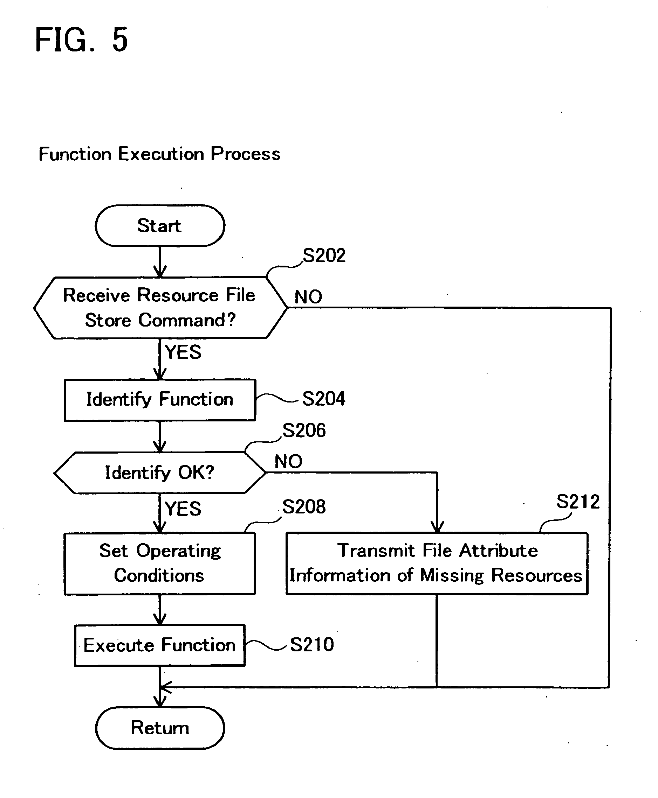

FIG.5 is a flowchart of a process (function execution process) executed by the device 100 when receiving the resource file store command that requires the device 100 to store resource files in the function folder 236.
The device 100 always monitors a command transmitted from the terminal 180. When receiving the resource file store command (step S202: YES), the device 100 determines that the received store command is a function execution command. In other words, the store command, transmitted by the terminal 180, that requires the device 100 to store the resource file in the function folder acts as a trigger for the device 100 to execute a predetermined function. In addition, the device 100 checks an identifier of the file designated by the store command, and determines that, when the identifier is "dev", the store command is a resource file store command. The "function folder" corresponds to the above-described "specific store region".
Next, the device 100 checks a resource file designated by the store command. By the resource files designated by the store command, the device 100 identifies a function to be executed (step S204). When the resource files designated by the store command is all the resource files stored in the scanner resource folder 220 (CIS.dev 222, sheet feeder.dev 224 and converter module.dev 226), the device 100 can identify, from the resources (namely, CIS 122, sheet feeder 124 and converter module 126) corresponding to these resource files, that a function to be executed in response to the store command is a scanner function (step S206: YES).

On the other hand, when the resource file designated by the store command is only CIS.dev 222 and sheet feeder.dev 224, the device 100 can presume but cannot identify, only from the resources (namely, CIS 122 and sheet feeder 124) corresponding to these resource files, that a function that the user desires is a scanner function (step S206: NO). In this case, the device 100 transmits to the terminal 180 a reply indicating that the converter module 126 is missing to identify and execute the scanner function (step S212). In other words, the device 100 transmits to the terminal 180 information of a type of a resource necessary to identify a function. The information may be restated as attribute information of a resource file corresponding to the resource necessary to identify a function. In this case, the device 100 transmits to the terminal 180 attribute information of the converter module.dev 226 corresponding to the converter module 126. The terminal 180 which receives this attribute information displays on the screen 282 information indicating that the converter module.dev 226 is missing. A user who viewed this display recognizes that in order to allow the device 100 to execute the scanner function, the designation of the converter module.dev 226 is needed. Further, the user drags and drops into the function folder 236 the converter module.dev 226 stored in the scanner resource folder 220.
The device 100, when receiving, from the terminal 180, the resource file store command that requires the device 100 to store the converter module.dev 226 in the function folder 236 (step S202:YES), again determines whether a function to be executed can be identified by the resource file designated by this store command (step S204). In this case, in combination with the CIS.dev 222 and sheet feeder.dev 224 designated by the previously received store command, the device 100 can identify the scanner function by the designated resource files: the CIS.dev 222, sheet feeder.dev 224 and the converter module.dev.
After identifying a function in step S206, the device 100 reads out the data of the respective resource files and sets operating conditions described in these resource files as operating conditions of the respective resources (step S208). For example, in the case of the engine fan.dev 214 shown in FIG.2, the device 100 sets the operating conditions such that the engine fan 114 operates at "normal mode".
After completing the operating conditions setting based on the resource files designated by the store command, the device 100 executes the scanner function identified in step S204 (step S210). When executing the scanner function, the device 100 operates the resources (a CIS 122, a sheet feeder 124 and a converter module 126) necessary for the scanner function with operating conditions described in the resource files corresponding to the respective resources.

Through the above-described process, by only dragging and dropping the resource files stored in the scanner resource folder 220 into the function folder 236 on the screen of the terminal 180, the user can control the device 100 to execute the scanner function. The user, by just dragging and dropping the resource files (files stored in the scanner resource folder 220, that can identifies the scanner function) into a specific folder (the function folder 236), can allow the device 100 to execute the scanner function.
At this time, the user can identify a function to be executed by selection (designation) of the resource files. Since a list of the resources (resource files) held in the device 100 is displayed on the screen of the terminal 180, the user can select, from a list of the resources, resources for identifying a desired function. The user, by just performing a simple file operation on the terminal 180 (file handling on the screen), can identify a desired function (in this case, the scanner function) and control the device 100 to execute the function.
Further, since information exchanged based on the file sharing protocol between the terminal 180 and the device 100 is only information of files and folders, a special user interface program for controlling the device 100 need not be installed in the terminal 180.

### (SECOND EMBODIMENT)

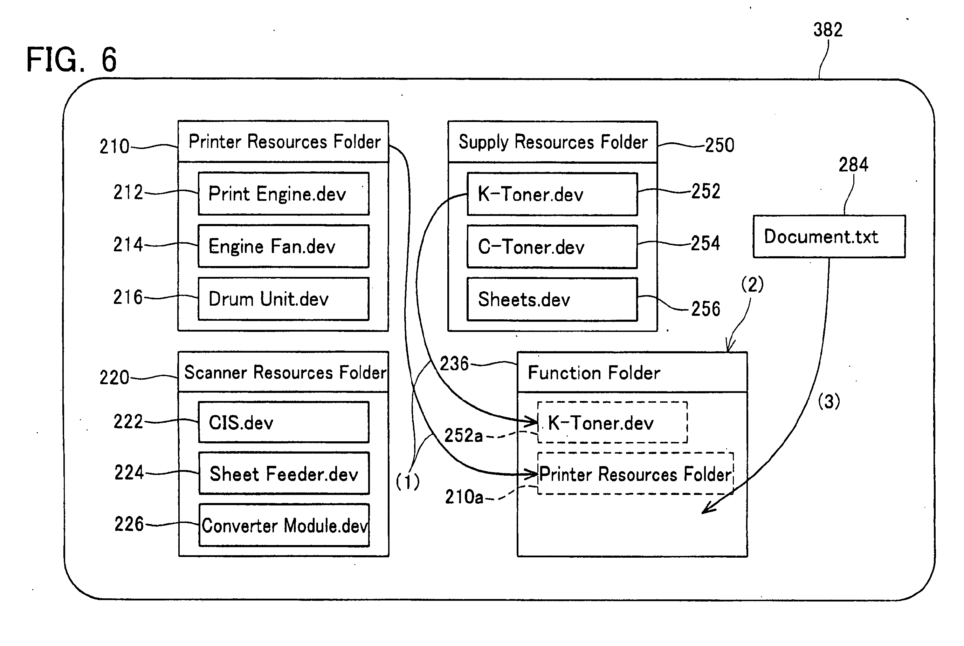

Next, a peripheral device according to a second embodiment will be described. A structure of a multifunctional device (embodiment of the peripheral device) according to the second embodiment is the same as that of the device 100 of the first embodiment. Therefore, a detailed description of the multifunctional device in the second embodiment is omitted. Also the multifunctional device of the second embodiment is referred to as the device 100. The device 100 according to the second embodiment, only when a user drags and drops resource files into the function folder 236 by a predetermined procedure, executes a function identified by the resource files.
Suppose now a case where a user controls the device 100 to execute a black-and-white print function. FIG.6 shows a screen 382 of the terminal 180.
The black-and-white print function is identified by a combination of all the printer resources (the print engine 112, the engine fan 114 and the drum unit 116) and the K-toner 152. Therefore, the user drags and drops into the function folder 236 all the resource files (the print engine.dev 212, the engine fan.dev 214 and the drum unit.dev 216) stored in the printer resource folder 210 and the K-toner.dev 252 stored in the supply resource folder 250. The file moving operation of the user on the screen is indicated by an arrow (1) of FIG.6. In addition, by dragging and dropping the whole printer resource folder 210 into the function folder 236, the user can allow the device 100 to store in the function folder 236 all the resource files stored in the printer resource folder 210. By the file moving operation of the user, a store command (the resource file store command or the first store command) that requires the device 100 to store in the function folder 236 all the resource files stored in the printer resource folder 210 and the K-toner.dev 252 is transmitted from the terminal 180 to the device 100. When the device 100 receives this resource file store command, the device 100 copies both all the resource files stored in the printer resource folder 210 and the printer resource folder 210, and stores the copied printer resource files 210a in the function folder 236. The printer resource folder 210a stores copies of the print engine.dev 212, the engine fan.dev 214 and the drum unit.dev 216. Simultaneously, the device 100 copies the K-toner.dev 252 stored in the supply resource folder 250 and stores the copied K-toner.dev 252a in the function folder 236. Results of copying and storing are transmitted from the device 100 to the terminal 180. As a result, information that the printer resource folder 210a as a copy of the printer resource folder 210 and the K-toner.dev 252a as a copy of the K-toner.dev 252 are stored in the function folder 236 is displayed on the screen 382 of the terminal 180.

Next, the user performs an operation for changing an attribute of the function folder 236. In FIG.6, the attribute changing operation by the user is indicated by an arrow (2). Specifically, the user displays properties of the function folder 236 on the screen 382 and changes the attribute of the function folder 236 from "writable" to "full accessible". The meaning of this process will be described later. In response of this attribute changing operation by the user, an attribute change command with respect to the function folder 236 is transmitted from the terminal 180 to the device 100. The device 100 changes an attribute of the function folder 236 in response to this attribute change command.
Finally, the user drags and drops into the function folder 236 a "document.txt 284" file desired to be printed in black and white. This user operation is indicated by an arrow (3) in FIG.6. By this user operation, the store command that requires the device 100 to store the document.txt 284 in the function folder 236 is transmitted from the terminal 180 to the device 100. When the device 100 receives this store command, the device 100 identifies the black-and-white print function by a combination of the resources corresponding to the resource files (all the resource files stored in the printer resource folder 210a and the K-toner.dev 252a) designated by the previously received store command (the resource file store command). Then the device 100 executes the identified black-and-white print function for the document.txt 284.

A process executed by the device 100 in accordance with the above-described user operation will be described.

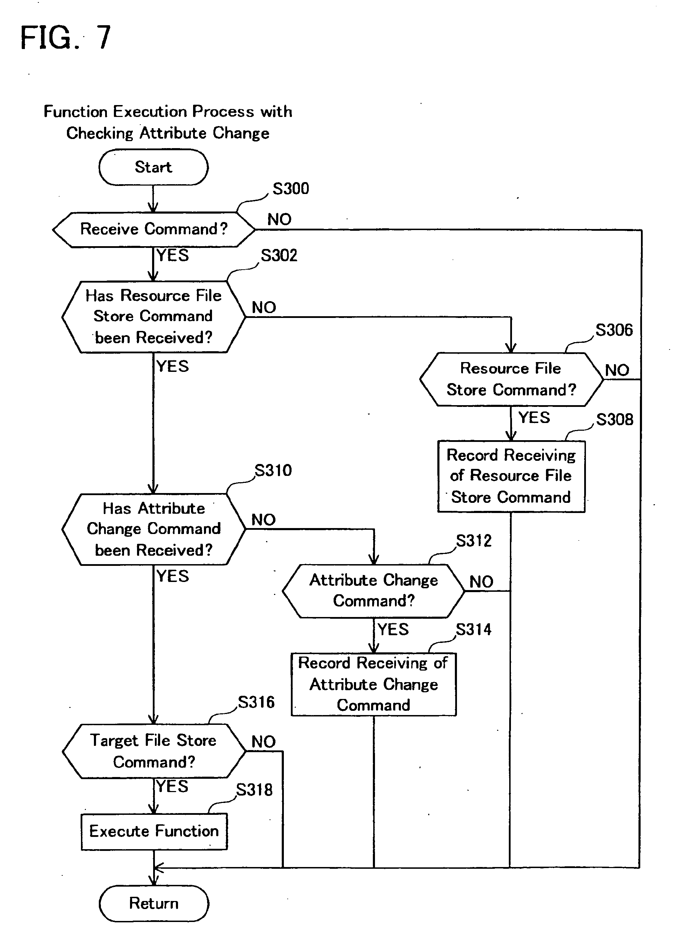

FIG.7 shows a flowchart of a function execution process (a function execution process with checking attribute change) in the case where the device 100 executes the black-and-white print function. In addition, a file (document.txt 284) targeted for a function executed by the device 100 is hereinafter referred to as a target file. This target file may be a file stored in a storage section provided with the terminal 180. A command that designates a target file and requires the device 100 to store the designated target file in the function folder 236 is referred to as a target file store command (or a second store command). By recognizing the identifier (file extension) "txt" of the file designated by the second store command, the device 100 determines that the store command is a target file store command. The identifier (file extension) of a file is a kind of attribute information of the file. In other words, from the attribute information of the file designated by the store command, the device 100 determines that the designated file is a target file.
The device 100 always monitors a command, supported by the file sharing protocol, transmitted from the terminal 180 (step S300). When receiving a command from the terminal 180 (step S300: YES), the device 100 checks whether to already have received the resource file store command (step S302). When having received no resource file store command (step S302: NO), the device 100 determines whether the command received this time is the resource file store command (step S306). When the command received this time is not the resource file store command (step S306: NO), the device 100 completes the process and returns again to the command waiting mode (step S300). When the command received this time is the resource file store command (step S306: YES), the device 100 records a fact receiving of the resource file store command (step S308) and returns again to the command waiting mode (step S300). In addition, the device 100 stores in the function folder 236 the resource file designated by the resource file store command, simultaneously with the process of step S308.

When the receiving of the resource file store command is recorded in step S308, it is determined, in step S302 of receiving a command next time, that the resource file store command has been already received (step S302: YES). In this case, the process proceeds to step S310. In step S310, the device 100 checks whether the attribute change command with respect to the function folder 236 has already been received. When having received no attribute change command (step S310: NO), the device 100 determines whether the command received this time is the attribute change command (step S312). When the command received this time is not the attribute change command (step S312: NO), the device 100 completes the process and returns again to the command waiting mode (step S300). When the command received this time is the attribute change command that requires the device 100 to change an attribute of the function folder 236 (step S312: YES), the device 100 records a fact receiving of the attribute change command (step S314) and returns again to the command waiting mode (step S300). In addition, the device 100, when receiving the attribute change command, changes an attribute of the designated folder in response to receiving the attribute change command.

When the receiving of the resource file store command is recorded in step S308 and the receiving of the attribute change command is recorded in step S314, both of the determinations in steps S302 and S310 of receiving a command next time become YES. In this case, the process proceeds to step S316 after receiving a command in step S300. In step S316, the device 100 determines whether the command received this time is the target file store command. When the command received this time is not the target file store command (step S316: NO), the device 100 completes the process and returns again to the command waiting mode (step S300). When the command received this time is the target file store command (step S316: YES), the device 100 stores in the function folder 236 a target file designated by the store command as well as executes an identified function (step S318). Here, the function to be executed is identified by the combination of the resources indicated by the resource files (files stored in the function folder 236 based on the resource file store command) designated by the resource file store command already received. In the case of the present embodiment, the black-and-white print function identified by the resources (the print engine 112, the engine fan 114, the drum unit 116 and the K-toner 152) corresponding to the print engine.dev 212, the engine fan.dev 214, the drum unit.dev 216 and the K-toner.dev 252 is the "identified function".
At this time, the device 100 executes the "identified function" (black-and-white print function) for the target file stored in the function folder 236 based on the target file store command. That is, the device 100 executes the black-and-white print function for the document.txt file as a target file.
On the other hand, when the target file is address data stored in the device 100 or the terminal 180, and when the identified function is a facsimile data transmission function, the following process is executed. The device 100, when receiving the target file store command, transmits predetermined facsimile data (e.g., facsimile data based on the sheet previously set in the sheet feeder 124 of the device 100) to a facsimile number destination described in the target file.

An advantage obtained by that the device 100 executes the process (function execution process with checking attribute change) of FIG.7 will be described. The process of FIG.7 means the following matters. More specifically, the device 100 executes the identified function when receiving; (1) the resource file store command (the first store command), (2) the attribute change command with respect to the function folder 236, and (3) the target file store command (the second store command) in this order. When the order of the commands is different from that as described above, the device 100 does not execute the function. In other words, by following the following three procedures, the user can control the device 100 to execute a desired function.
(1) The user drags and drops resource files for identifying the function into the function folder 236. This user operation is indicated by an arrow (1) in FIG.6.
(2) The user changes an attribute of the function folder. This user operation is indicated by an arrow (2) in FIG.6.
(3) The user drags and drops a target file into the function folder 236. This user operation is indicated by an arrow (3) in FIG.6.
   If the user dragging and dropping the resource files and the target file into the function folder 236 without performing the operation (2), the device 100 will does not execute the desired function. That is, the process (2) acts as a safety switch of the device 100. When accidentally dragging and dropping the resource files or the target file into the function folder 236, the user can prevent the device 100 from starting the function execution.

Finally, a process executed by the terminal 180 in the first and second embodiments will be described.

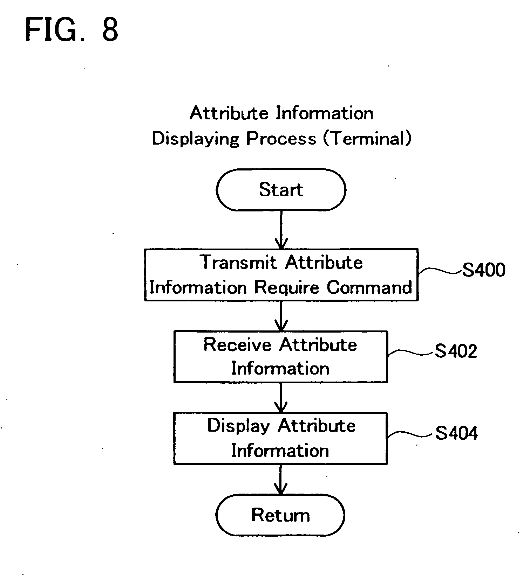

FIG.8 shows a flowchart of a process executed by the terminal 180 when displaying the screen shown in FIG.3 or FIG.6..
When the user performs a predetermined operation for the terminal 180 (e.g., an operation of double clicking of an icon that represents the device 100 displayed on the screen), the terminal 180 transmits the attribute information require command to the device 100 (step S400). The device 100 transmits, to the terminal 180 in response to reception of this attribute information require command, information (attribute information) of its own folders or files. The terminal 180 receives the attribute information of files or folders from the device 100 (step S402) and displays the received attribute information on the screen (step S404). Results of the process of step S404 are a figure of the screen shown in FIG.3 or FIG.6.

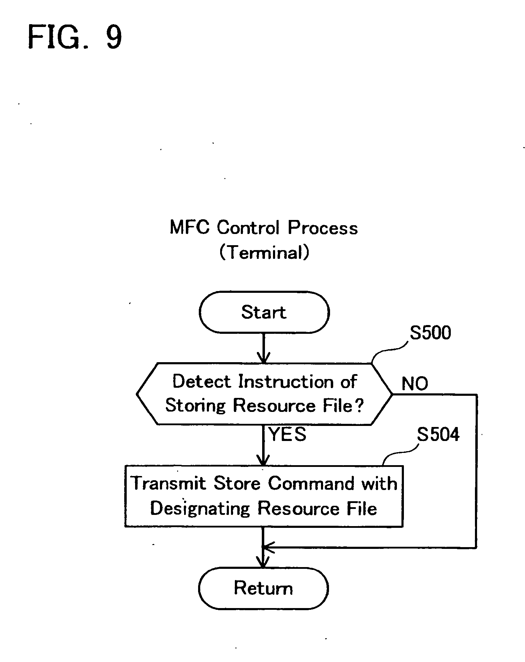

FIG.9 shows a flowchart of a process executed by the terminal 180 when a user instructs the device 100 to execute a desired function.
As described above, from among the resource files displayed on a screen of the terminal 180, a user who wants to control the device 100 to execute a desired function selects resource files for identifying a desired function, and drags and drops the selected resource files into the function folder 236. For the device 100, this moving operation is an input operation of the instruction to store the selected resource files in the function folder 236. The terminal 180 detects this input operation by the user (step S500: YES). The terminal 180 transmits to the device 100 the resource file store command that requires the device 100 to store, in the function folder, the resource files selected by the user. For the terminal 180, the transmission of the resource file store command is a command that instructs the device 100 to execute a function identified by the combination of the resources corresponding to the resource files selected by the user.

In the above-described embodiments, the CPU 102 transmitting information such as resource files to the terminal 180 corresponds to one example of the "transmitter" in the claims. Specifically, the CPU 102 executing the process of step S104 corresponds to one example of the "transmitter".
Further, the CPU 102 receiving the store command corresponds to one example of the "receiver" in the claims. Specifically, the CPU 102 executing the processes of steps S202, S300, S302, S310 and S316 corresponds to one example of the "receiver".
Further, the CPU 102 identifying a function and executing the identified function corresponds to one example of the "function controller" in the claims. Specifically, the CPU 102 executing the processes of steps S204, S210 and S318 corresponds to one example of the "function controller".
The "transmitter", the "receiver" or the "function controller" realized by the CPU 102 may have technical features of the device 100 in the above-described embodiments.
The processes (or steps) executed by the CPU 102 are just those of the device 100. Accordingly, the processes (or steps) executed by the "transmitter", the "receiver" or the "function controller" can be restated as "the processes executed by the device 100".
The above-described device 100 may be described as follows. The device 100 is a peripheral device being able to execute a plurality of functions and being controlled from a terminal via a network. The peripheral device comprises:
- a plurality of resources that are used for executing the functions; and
- a memory that stores data of a specific store region for storing files and a plurality of resource files, wherein each of the resource files respectively corresponds to each of the resources. This peripheral device (the device 100) executes the following processes:

- a transmitting process for transmitting, to the terminal with communication based on a file sharing protocol, information including the specific store region and a list of the resource files in the memory;
- a receiving process for receiving a first store command from the terminal with communication based on the file sharing protocol, wherein the first store command designates at least one resource file in the list and requires the peripheral device to store the designated resource file in the specific store region; and
- a function controlling process for identifying at least one of the functions from a combination of the resources corresponding to the designated resource files and for executing the identified function.

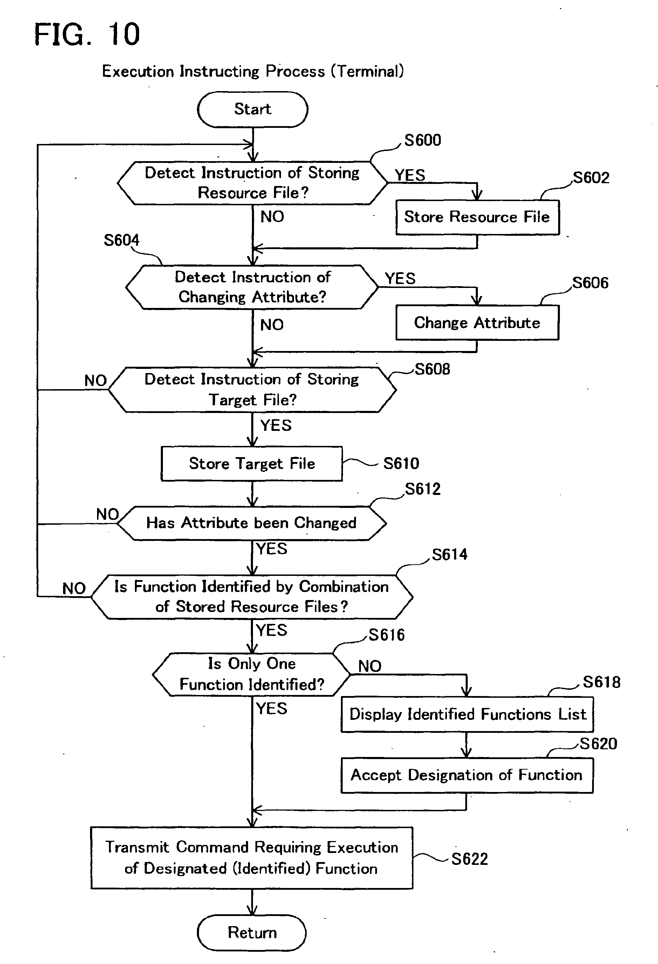

A terminal suitable for controlling the device 100 according to the above-described embodiments will be described.
The terminal 180 may control the device 100 to execute a function provided in the device 100 in the above-described embodiments. More specifically, when executing the attribute information displaying process shown in FIG.8 for displaying on the screen the attribute information received from the device 100, the terminal 180 executes an execution instructing process shown in FIG. 10.
From among the resource files displayed on a screen of the terminal 180, a user selects resource files for identifying a desired function, and drags and drops the selected resource files into the function folder. The terminal 180 detects this file moving operation of the user as an instruction to store resource files (step S600: YES). Then the terminal 180 stores the resource files designated (dragged and dropped) by the user in the function folder (step S602). Next, the terminal 180 determines whether to be instructed by the operation of the user to change the attribute of the function folder from "writable" to "full accessible" (step S604). When detecting the instruction of changing the attribute (step S604: YES), the terminal 180 changes the attribute (step S606). Next, the terminal determines whether the target file is dragged and dropped into the function folder by the operation of the user (step S608). If the target file is not dragged and dropped into the function folder (step S608: NO), the terminal returns to step S600 and waits for detecting the next user's operation. When detecting the instruction of storing the target file (step S608), the terminal 180 stores the target file in the function folder based on the instruction (step S610). Next, the terminal determines whether the attribute of the function folder has been already changed by the operation of the user (step S612). When the attribute has not been changed yet (step S612: NO), the terminal 180 returns to S600 and waits for the next operation of the user. When the attribute has been changed (step S612: YES), the terminal 180 determines whether the function identified by a combination of the resource files stored in the function folder is present (step S614). When the identified function is absent (step S614: NO), specifically, when the resource file to be stored is missing, the terminal 180 returns to S600. When the identified function is present (step S614: YES), the terminal 180 determines whether only one function is identified (step S616). When a plurality of the identified functions are present (step S616: NO), the terminal 180 displays a list of the identified functions (step S618) and allows the user to select a desired function (step S620). When one function is identified (step S616: YES), or when one function is selected by the user from among the list (step S620), the terminal 180 instructs the device 100 to execute the "identified function" for the target file stored in the function folder (step S622).
The device 100, when receiving from the terminal 180 the command that instructs the execution of the function, executes the function in response to reception of the command.
By the above-described structure, a user can easily identify from the terminal 180 a desired function of the device 100 and allow the device 100 to execute the identified function.

By combination of the device 100 and the terminal 180, the technical feature of the embodiment may be restated as a method for executing functions provided in a peripheral device. The method comprising following steps:
- a step (S404) of displaying resource files (212, 222, etc.) and a specific store region (236), wherein the resource files indicates resources (112, 122, etc.), provided in the peripheral device (100), necessary to execute the specific function and the specific store region can store the resource files;
- a step (S602) of storing in the specific store region the resource files specified by a user; and
- a step (S210) of executing one of the functions identified by a combination of the stored resource files.

Specific examples of the present invention are described above in detail, but those examples are merely illustrative and place no limitation on the scope of the patent claims. The technology described in the patent claims also includes the changes and modifications of the above-described specific examples. For example, the peripheral device realized by the present invention is not limited to the peripheral device. Technical features of the peripheral device according to, the above-described embodiments may be provided with the other peripheral devices such as a printer.
Furthermore, the technology components explained in the specification or appended drawings demonstrate their technical utility when used alone or in variety of combinations thereof and are not limited to the combinations described in the patent claims at the time of filing of the application. Furthermore, the technology illustrated by the specification or appended drawings can attain multiple objects at the same time, and attaining one of those objects by itself has a technical utility.

## Claims

1. A peripheral device (100) being able to execute a plurality of functions and being controlled from a terminal via a network, comprising:
a plurality of resources (110, 120, 130, 150) that are used for executing the functions;
a memory (132) that stores a plurality of resource files (138) each of which respectively corresponds to each of the resources and stores data of a specific store region (136) for storing files;
a transmitter that transmits, to the terminal based on a file sharing protocol, information including the specific store region and a list of the resource files in the memory;
a receiver that receives, from the terminal based on the file sharing protocol, a first store command that designates at least one resource file in the list and requires the peripheral device to store the designated resource file in the specific store region; and
a function controller that identifies at least one of the functions by a combination of the resources corresponding to the designated resource files stored in the specific store region and executes the identified function,
**characterized in that**
each resource file records operating conditions of the corresponding resource; and
the controller operates the resources using the operating conditions recorded in the designated resource files when executing the identified function.

2. The peripheral device (100) as in claim 1, wherein:
the receiver receives, from the terminal based on the file sharing protocol, a second store command that designates a target file having a specific attribute and requires the peripheral device to store the designated target file in the specific store region; and
the function controller executes the identified function for the designated target file.

3. The peripheral device (100) as in claim 2, wherein:
the function controller executes the identified function when the receiver receives the first store command, an attribute change command that requires the peripheral device to change an attribute of the specific store region, and the second store command in this order.

4. The peripheral device (100) as in one of claim 1 to 3, wherein the transmitter transmits, to the terminal, information of the type of resources necessary to identify the function when the function controller can not identify the function by the combination of the resources corresponding to the designated resource files.

5. The peripheral device (100) as in one of claim 1 to 4, wherein:
the plurality of functions includes at least a print function and a scanner function; and
the memory (132) stores the resource files (212, 214, 216) by which the print function can be identified and the resource files (222, 224, 226) by which the scanner function can be identified.

6. The peripheral device (100) as in one of claim 1 to 4, wherein the memory (132) stores a configuration file, as one of the resource files, that indicates setting conditions necessary to execute at least one function.

## Patentansprüche

1. Peripherievorrichtung (100), die in der Lage ist, eine Mehrzahl von Funktionen auszuführen und über ein Netzwerk von einem Endgerät gesteuert werden kann, wobei es aufweist:
eine Mehrzahl von Ressourcen (110, 120, 130, 150), die verwendet werden zum Ausführen der Funktionen;
einen Speicher (132), der eine Mehrzahl von Ressourcen-Dateien (138) speichert, die alle jeweilig allen der Ressourcen entsprechen, und Daten eines bestimmten Speicherbereiches (136) zum Speichern von Dateien speichern;
einen Sender, der an das Endgerät auf Grundlage eines Filesharing-Protokolls Information einschließlich dem bestimmten Speicherbereich und einer Liste der Ressourcen-Dateien in dem Speicher sendet;
einen Empfänger, der von den Endgerät auf der Grundlage des Filesharing-Protokolls einen ersten Speicherbefehl empfängt, der zumindest eine Ressourcen-Datei in der Liste bestimmt und von der Peripherievorrichtung fordert, die bestimmte Ressourcen-Datei in dem bestimmten Speicherbereich zu speichern; und
eine Funktionssteuereinheit, die zumindest eine der Funktionen durch eine Kombination der Ressourcen, die den in dem bestimmten Speicherbereich gespeicherten bestimmten Ressourcen-Dateien entsprechen, identifiziert und die identifizierte Funktion ausführt,
**dadurch gekennzeichnet, dass**
jede Ressourcen-Datei Betriebsbedingungen der entsprechenden Ressource festhält; und
die Steuereinheit die Ressourcen mit dem in den bestimmten Ressourcen-Dateien festgehaltenen Betriebsbedingungen betreibt, wenn die identifizierte Funktion ausgeführt wird.

2. Peripherievorrichtung (100) nach Anspruch 1, wobei:
der Empfänger von dem Endgerät auf der Grundlage des Filesharing-Protokolls einen zweiten Speicherbefehl empfängt, der eine Zieldatei mit einem bestimmten Attribut bestimmt und von der Peripherievorrichtung fordert, die bestimmte Zieldatei in dem bestimmten Speicherbereich zu speichern; und
die Funktionssteuereinheit die identifizierte Funktion für die bezeichnete Zieldatei auszuführt.

3. Peripherievorrichtung (100) nach Anspruch 2, wobei:
die Funktionssteuereinheit die identifizierte Funktion ausführt, wenn der Empfänger den ersten Speicherbefehl, einen Attributänderungsbefehl, der von der Peripherievorrichtung fordert, ein Attribut des bestimmten Speicherbereichs zu ändern, und den zweiten Speicherbefehl in dieser Reihenfolge empfängt.

4. Peripherievorrichtung (100) nach einem der Ansprüche 1 bis 3, wobei der Sender an das Endgerät Information des Typs der Ressourcen sendet, die notwendig ist zum Identifizieren der Funktion, wenn die Funktionssteuereinheit die Funktion nicht durch Kombination von den bestimmten Ressourcen-Dateien entsprechenden Ressourcen identifizieren kann.

5. Peripherievorrichtung (100) nach einem der Ansprüche 1 bis 4, wobei:
die Mehrzahl von Funktionen zumindest eine Druckfunktion und eine Scanner-Funktion einschließen; und
der Speicher (132) die Ressourcen-Dateien (212, 214, 216), durch die die Druckfunktion identifiziert werden kann, und die Ressourcen-Dateien, durch die die Scanner-Funktion identifiziert werden kann, speichert.

6. Peripherievorrichtung (100) nach einem der Ansprüche 1 bis 4, wobei der Speicher (132) eine Konfigurationsdatei als eine der Ressourcen-Dateien speichert, die zum Ausführen zumindest einer Funktion notwendige Einstellbedingungen angibt.

## Revendications

1. Dispositif périphérique (100) pouvant exécuter une pluralité de fonctions et étant commandé à partir d'un terminal via un réseau, comprenant :
une pluralité de ressources (110, 120, 130, 150) qui sont utilisées pour exécuter les fonctions ;
une mémoire (132) qui stocke une pluralité de fichiers de ressources (138), chacun d'eux correspondant respectivement à chacune des ressources, et qui stocke des données d'une région de stockage spécifique (136) pour stocker des fichiers ;
un émetteur qui émet, vers le terminal basé sur un protocole de partage de fichiers, des informations comprenant la région de stockage spécifique et une liste des fichiers de ressources dans la mémoire ;
un récepteur qui reçoit, en provenance du terminal basé sur le protocole de partage de fichiers, une première commande de stockage qui indique au moins un fichier de ressources dans la liste et qui exige du dispositif périphérique de stocker le fichier de ressources indiqué dans la région de stockage spécifique ; et
un contrôleur de fonction qui identifie au moins l'une des fonctions par une combinaison des ressources correspondant aux fichiers de ressources indiqués stockés dans la région de stockage spécifique et qui exécute la fonction identifiée ;
**caractérisé en ce que** :
chaque fichier de ressources enregistre les conditions d'actionnement de la ressource correspondante ; et
le contrôleur actionne les ressources en utilisant les conditions d'actionnement enregistrées dans les fichiers de ressources indiqués lors de l'exécution de la fonction identifiée.

2. Dispositif périphérique (100) selon la revendication 1, dans lequel :
le récepteur reçoit, en provenance du terminal basé sur le protocole de partage de fichiers, une seconde commande de stockage qui indique un fichier cible présentant un attribut spécifique et exige du dispositif périphérique de stocker le fichier cible indiqué dans la région de stockage spécifique ; et
le contrôleur de fonction exécute la fonction identifiée pour le fichier cible indiqué.

3. Dispositif périphérique (100) selon la revendication 2, dans lequel :
le contrôleur de fonction exécute la fonction identifiée lorsque le récepteur reçoit la première commande de stockage, une commande de modification d'attribut qui exige du dispositif périphérique de modifier un attribut de la région de stockage spécifique et la seconde commande de stockage, dans cet ordre.

4. Dispositif périphérique (100) selon l'une des revendications 1 à 3, dans lequel l'émetteur émet, vers le terminal, des informations du type de ressources nécessaires pour identifier la fonction lorsque le contrôleur de fonction ne peut pas identifier la fonction par la combinaison des ressources correspondant aux fichiers de ressources indiqués.

5. Dispositif périphérique (100) selon l'une des revendications 1 à 4, dans lequel :
la pluralité de fonctions comprend au moins une fonction d'impression et une fonction de numérisation ; et
la mémoire (132) stocke les fichiers de ressources (212, 214, 216) qui permettent d'identifier la fonction d'impression et les fichiers de ressources (222, 224, 226) qui permettent d'identifier la fonction de numérisation.

6. Dispositif périphérique (100) selon l'une des revendications 1 à 4, dans lequel la mémoire (132) stocke un fichier de configuration, en tant que l'un des fichiers de ressources, qui indique des conditions de réglage nécessaires à l'exécution d'au moins une fonction.
